# EUROPÄISCHE PATENTSCHRIFT

(11) **EP 2 888 789 B1**
(45) Veröffentlichungstag und Bekanntmachung des Hinweises auf die Patenterteilung: **18.10.2017**
(21) Anmeldenummer: 13750061.7
(22) Anmeldetag: 15.08.2013
(51) Int. Cl.: H01S 3/04, H01S 3/042, H01S 3/06, H01S 3/094

(54) **FESTKÖRPERLASERANORDNUNG UND VERFAHREN ZU DEREN HERSTELLUNG**
SOLID-STATE LASER DEVICE AND METHOD FOR THE PRODUCTION THEREOF
ENSEMBLE LASER À SOLIDE ET SON PROCÉDÉ DE PRODUCTION

(30) Priorität: 23.08.2012 DE 102012214971
(43) Veröffentlichungstag der Anmeldung: 01.07.2015
(73) Patentinhaber: TRUMPF Laser GmbH, 78713 Schramberg (DE)
(72) Erfinder: SCHAD, Sven-Silvius, 78628 Rottweil (DE); KAISER, Elke Dolores, 78733 Aichhalden (DE)
(74) Vertreter: Kohler Schmid Möbus Patentanwälte
(86) Internationale Anmeldenummer: PCT/EP2013/067085
(87) Internationale Veröffentlichungsnummer: WO 2014/029687

(56) Entgegenhaltungen:
- EP-A1- 1 670 104
- EP-A2- 1 178 579
- JP-B- 4 879 733
- US-A1- 2006 108 050
- US-A1- 2010 303 120

## Beschreibung

Die vorliegende Erfindung betrifft eine Festkörperlaseranordnung, umfassend: einen plattenförmigen Festkörper mit einem laseraktiven Medium, eine Wärmesenke, eine zwischen einer Trägerfläche der Wärmesenke und dem plattenförmigen Festkörper angebrachte Klebstoffschicht, sowie eine reflektierende Beschichtung, die an einer der Klebstoffschicht zugewandten Seite an dem plattenförmigen Festkörper angebracht ist. Die Erfindung betrifft auch ein entsprechendes Herstellungsverfahren.

Eine Anordnung der eingangs genannten Art ist beispielsweise aus der EP1178579A2 bekannt geworden. Dort wird zur Ableitung von Wärme von dem plattenförmigen Festkörper zum Wärmesenke (dort als Kühlkörper bezeichnet) vorgeschlagen, die der Wärmesenke zugewandte Seite des plattenförmigen Festkörpers mit der an der Wärmesenke gebildeten Trägerfläche durch eine Klebstoffschicht mechanisch und thermisch zu koppeln. Die Klebstoffschicht ist aus einem Klebstoff hergestellt, der im Wesentlichen volumeninvariant von einem flüssigen in einen festen, vernetzten Zustand übergeht. Die Klebstoffschicht weist einen aktiven Klebstoffschichtbereich mit einem Wärmewiderstand von weniger als 10 K mm² / W auf. Mit dieser Lösung soll erreicht werden, dass der mechanisch äußerst empfindliche Festkörper fest und ohne nennenswerte mechanische Deformationen an der Wärmesenke fixiert wird und durch die Klebstoffschicht keine Drosselung des Wärmeflusses von dem Festkörper in den Kühlkörper erfolgt.

Eine Festkörperlaseranordnung wie oben beschrieben eignet sich zur Erzeugung von hohen Laserleistungen im Kilowatt-Bereich. Wegen der geringen Dicke des plattenförmigen Festkörpers wird allerdings beim Pumpen des Lasermediums bei einem einfachen Durchgang nur wenig Pumpstrahlung absorbiert. Zur Erhöhung der Effizienz einer solchen Festkörperlaseranordnung kann die Pumpstrahlung mehrfach umgelenkt und zum plattenförmigen Festkörper zurück reflektiert werden. Hierbei kann die Pumpstrahlung mehrfach z.B. an einem Parabolspiegel auf den plattenförmigen Festkörper fokussiert werden, wie dies beispielsweise in der DE 100 05 195 A1 beschrieben ist. Durch die mehrfache Umlenkung kann mit einem einzigen gepumpten plattenförmigen Festkörper eine Laserleistung von ca. 2 kW oder mehr erzeugt werden.

Bei einer derart hohen Leistung der Laserstrahlung wird der plattenförmige Festkörper bzw. das laseraktive Festkörpermedium trotz der Kühlung über eine Wärmesenke thermisch stark beansprucht. Da die Pumpstrahlung in der Regel nur in einem Teil des gesamten Volumens auf den plattenförmigen Festkörper fokussiert wird, ist das Pumpstrahlungsfeld und damit auch die eingebrachte Wärmeleistung auf diesen Teil des Volumens konzentriert, während in einem Randbereich des plattenförmigen Festkörpers die eingekoppelte Pumpleistung bzw. das Pumpstrahlungsfeld deutlich schwächer ist. Durch die Unterschiede in der Stärke des Pumpstrahlungsfeldes und entsprechend auch des im aktiven Lasermedium erzeugten Laserstrahlungsfeldes treten besonders in den Randbereichen des plattenförmigen Festkörpers starke thermische Belastungen auf, die bis zum Abbrand des Festkörpermediums in den Randbereichen führen können und die demzufolge zu einer Beeinträchtigung der Effektivität der Festkörperlaseranordnung und ggf. zu einem totalen Ausfall der Festkörperlaseranordnung führen können.

Weitere gekühlte Festkörperlaser sind aus JP 4 879733 B2, EP 1 670 104 A1 und US 2010/303120 A1 bekannt.

### Aufgabe der Erfindung

Es ist die Aufgabe der vorliegenden Erfindung, eine Festkörperlaseranordnung der eingangs genannten Art dahingehend weiterzubilden, dass diese hohen thermischen Belastungen standhalten kann, sowie ein Verfahren zur Herstellung einer solchen Festkörperlaseranordnung anzugeben.

### Gegenstand der Erfindung

Die Aufgabe der vorliegenden Erfindung wird gelöst durch eine Anordnung und eine Methode zu ihrer Herstellung wie definiert in den unabhängigen Ansprüchen 1,11. Bevorzugte Ausführungsformen werden in den abhängigen Ansprüchen definiert.

Diese Aufgabe wird erfindungsgemäß gelöst durch eine Laserverstärkeranordnung der eingangs genannten Art, bei der die Klebstoffschicht durch einen strahlungsundurchlässigen Bereich, der zwischen der der Klebstoffschicht zugewandten Seite des plattenförmigen Festkörpers und der Trägerfläche der Wärmesenke gebildet ist, vollständig vor Strahlung aus dem plattenförmigen Festkörper abgeschirmt ist. Unter einer vollständigen Abschirmung wird im Sinne dieser Anmeldung verstanden, dass keine direkte (geradlinige) Sicht-Verbindung zwischen dem Festkörper und der Klebstoffschicht besteht, d.h. die Klebstoffschicht wird vollständig durch den strahlungsundurchlässigen Bereich abgeschattet bzw. abgeschirmt.

Die Erfinder haben herausgefunden, dass die oben beschriebenen Probleme (Effektivitätsverlust bzw. Totalausfall der Festkörperlaseranordnung) bei einer hohen thermischen Belastung des plattenförmigen Festkörpers von einer Absorption der Laserstrahlung durch den Klebstoff der Klebstoffschicht hervorgerufen wird. Bei der absorbierten Laserstrahlung handelt es sich typischer Weise um so genannte spontane oder verstärkte spontane Emissionen ("Amplification of Spontaneous Emission", ASE) bzw. durch diese hervorgerufene (unerwünschte) in lateraler Richtung in dem plattenförmigen Festkörper propagierende Lasermoden, die aus dem Festkörper abgestrahlt werden. Die typischer Weise für die Klebstoffschicht verwendeten Klebstoffe sind nicht bzw. nicht vollständig transparent für die Wellenlänge der Pumpstrahlung bzw. der im laseraktiven Medium erzeugten Laserstrahlung (z.B. im IR- oder VIS-Bereich), so dass es zu einer Absorption von Laserstrahlung in dem Klebstoff und damit einhergehend zu einer Degradation der Klebstoffschicht kommt. Dies kann u.a. zu einer Verringerung der Wärmeleitung der Klebstoffschicht und somit zu einer Drosselung des Wärmeflusses von dem plattenförmigen Festkörper in die Wärmesenke führen.

Die Erfinder haben ebenfalls erkannt, dass eine solche Degradation der Klebstoffschicht im Wesentlichen in den Randbereichen des plattenförmigen, typischer Weise scheibenförmigen Festkörpers auftritt, da am Rand des Festkörpers der Klebstoff den Festkörper ggf. nicht vollflächig benetzt, die Klebstoffschicht über den plattenförmigen Festkörper hinaus ragt oder die reflektierende Beschichtung Löcher bzw. Lücken aufweist. Insbesondere ein seitliches Überstehen der Klebstoffschicht über den Rand des Festkörpers hat sich als problematisch erwiesen. Auch das Entfernen des über den Rand des Festkörpers überstehenden Teils der Klebstoffschicht mittels herkömmlicher Reinigungsschritte löst dieses Problem ggf. nicht vollständig, da auch kleineste Klebstoff-Rückstände schon problematisch sein können. Beispielsweise kann bereits eine ca. 1 nm dicke Kohlenstoffschicht zum vollflächigen Abbrand des Randes des Festkörpers führen.

Daher wird vorgeschlagen, einen strahlungsundurchlässigen Bereich zwischen dem Festkörper und der Wärmesenke auszubilden, um die Klebstoffschicht vollständig, d.h. auch am Rand, vor Laserstrahlung aus dem plattenförmigen Festkörper zu schützen.

Bevorzugt enthält der strahlungsundurchlässige Bereich einen unterbrechungsfrei an dem plattenförmigen Festkörper angebrachten Bereich der reflektierenden Beschichtung, d.h. einen Bereich, in dem die reflektierende Beschichtung zusammenhängend, d.h. ohne Lücken, Spalte oder dergleichen, in welche der Klebstoff eindringen kann, auf den Festkörper aufgebracht ist. Unter dem Begriff "unterbrechungsfrei" wird verstanden, dass in dem betreffenden Bereich ggf. kleinere Defekte (Beschichtungsfehler) mit einer lateralen Dimension von maximal 10 µm bis 20 µm vorhanden sein dürfen, in welche der Klebstoff eindringen kann. Bei Defekten der Beschichtung, welche diese laterale Dimension nicht überschreiten, ist die Wärmeanbindung noch ausreichend, d.h. der Klebstoff wird zwar lokal erwärmt, aber es kommt noch nicht zu einer Degradation des Klebstoffs. Es versteht sich, dass die reflektierende Beschichtung eine möglichst hohe Reflektivität für die Pumpstrahlung (und auch für die in dem laseraktiven Medium erzeugte Laserstrahlung) aufweist, so dass diese typischer Weise in einem Bereich, in dem diese ohne Lücken aufgebracht ist, strahlungsundurchlässig ist bzw. eine hinreichend große Abschirmwirkung für die Laserstrahlung aufweist. Bevorzugt ist die Klebstoffschicht nur innerhalb des strahlungsundurchlässigen Bereichs der reflektierenden Beschichtung zwischen dem plattenförmigen Festkörper und der Wärmesenke angebracht.

Bei einer weiteren Ausführungsform enthält der strahlungsundurchlässige Bereich einen unterbrechungsfreien Bereich einer zwischen dem plattenförigen Festkörper und der der Klebstoffschicht angebrachten Absorberschicht. Die Absorberschicht kann direkt auf die reflektierende Beschichtung aufgebracht werden oder zwischen der reflektierenden Beschichtung und dem plattenförmigen Festkörper angebracht sein. Es versteht sich, dass im letzteren Fall der Oberflächenbereich, in dem die Pumstrahlung auftrifft (d.h. den Bereich des Pumpflecks) nicht mit der Absorberschicht versehen werden darf, d.h. die Absorberschicht wird nur in einem beispielsweise ringförmigen Randbereich auf den plattenförmigen Festkörper aufgebracht. Auf die ringförmige Absorberschicht kann dann die reflektierende Beschichtung vollflächig, d.h. auf die gesamte der Klebstoffschicht zugewandte Oberfläche des Festkörpers aufgebracht werden. Es versteht sich, dass ggf. alternativ beim Aufbringen der reflektierenden Beschichtung der Bereich ausgespart werden kann, in dem die Absorberschicht aufgebracht ist bzw. die reflektierende Beschichtung und die Absorberschicht sich teilweise überlappen können.

Die Absorberschicht enthält ein die von dem Festkörper abgestrahlte Laserstrahlung absorbierendes Material. Es versteht sich, dass das Material der Absorberschicht eine möglichst niedrigen Wärmewiderstand aufweisen sollte, um eine gute thermische Kopplung mit der Wärmesenke sicherzustellen. Als Material für die Absorberschicht kann z.B. Chrom verwendet werden. Wie oben beschrieben ist, kann die Absorberschicht außerhalb des Pumpflecks auf den Festkörper aufgebracht werden, was den Vorteil hat, dass verstärkte spontane Emissionen unterdrückt werden können. Die Absorberschicht kann vollflächig auf die reflektierende Beschichtung aufgebracht werden, es ist aber auch möglich, dass sich ein unterbrechungsfrei aufgebrachter Bereich der reflektierenden Beschichtung und ein unterbrechungsfrei aufgebrachter Bereich der Absorberschicht zur dem strahlungsundurchlässigen Bereich ergänzen, wobei die unterbrechungsfrei aufgebrachten Bereiche der Beschichtung und der Absorberschicht sich ganz oder teilweise überlappen können. Es schließt der strahlungsundurchlässige Bereich der reflektierenden Beschichtung bzw. der Absorberschicht bündig mit dem plattenförmigen Festkörper ab, d.h. die reflektierende Beschichtung bzw. die Absorberschicht ist vollflächig (und zusammenhängend) auf die der Wärmesenke zugewandte Seite des Festkörpers aufgebracht. Das Aufbringen der (dielektrischen) reflektierenden Beschichtung bzw. der Absorberschicht erfolgt durch einen Beschichtungsprozess, z.B. durch Abscheiden aus der Gasphase ("physical vapor deposition", PVD, insbesondere durch Sputtern). Durch den Beschichtungsprazess oder ggf. durch die Handhabung des plattenförmigen Festkörpers nach dem Aufbringen der Beschichtung ist diese insbesondere in unmittelbarer Nachbarschaft zum umlaufenden Rand typischer Weise nicht vollflächig aufgebracht und weist dort Lücken bzw. Löcher auf. Um dennoch eine reflektierende Beschichtung bzw. eine Absorberschicht zu erhalten, die sich unterbrechungsfrei bis zum umlaufenden Rand erstreckt, kann der plattenförmige Festkörper randseitig beschnitten werden, so dass der Bereich, in dem die reflektierende Beschichtung bzw. die Absorberschicht nicht unterbrechungsfrei aufgebracht ist, abgetrennt und vollständig entfernt wird. Das randseitige Beschneiden des plattenförmigen Festkörpers ist auch günstig, um ggf. am Rand des plattenförmigen Festkörpers vorhandene Ausbrüche zu entfernen, die zu unerwünschten mechanischen Belastungen führen können. Es erstreckt sich auch die Klebstoffschicht bis zum umlaufenden Rand des plattenförmigen Festkörpers und schließt mit dem plattenförmigen Festkörper, genauer gesagt mit dessen umlaufendem Rand, bündig ab. Typischer Weise lässt sich trotz der Verwendung eines Klebstoffs, der im Wesentlichen volumeninvariant von einem flüssigen in einen festen Zustand übergeht, bei einer auf herkömmliche Weise erzeugten Klebeverbindung kein bündiger Abschluss mit dem Rand des plattenförmigen Festkörpers erreichen, da einerseits beim Aufsetzen des Festkörpers auf die Wärmesenke der Klebstoff verdrängt wird und andererseits die Oberflächenspannung bzw. die ggf. unzureichende Benetzung durch den Klebstoff einen bündigen Abschluss erschweren. Unter einem bündigen Abschluss wird hier ein maximaler Abstand der Klebstoffschicht vom umlaufenden, ggf. konisch verlaufenden Rand des plattenförmigen Festkörpers von weniger als 10 µm, ggf. von weniger als 5 µm, insbesondere von weniger als 2 µm verstanden.

Zur Erzeugung eines bündigen Abschlusses der Klebstoffschicht kann an dem plattenförmigen Festkörper nach dem Aufkleben auf die Wärmesenke (und nach dem Trocknen des Klebstoffs) ein randseitiger Materialabtrag vorgenommen werden, bei dem die ggf. überstehende Klebstoffschicht und die reflektierende Beschichtung randseitig beschnitten werden. Nach dem Materialabtrag, der unter einem Winkel zur Trägerfläche der Wärmesenke erfolgt, schließt ein umlaufender Rand des plattenförmigen Festkörpers mit der der Klebstoffschicht zugewandten Seite des Festkörpers einen von 90° verschiedenen Neigungswinkel ein, der typischer Weise zwischen ca. 10° und ca. 80° beträgt. Der umlaufende Rand des Festkörpers bildet nach dem Abtrag typischer Weise eine Fase bzw. hat die Form eines Kegelstumpfes. Gleiches gilt für die Klebstoffschicht, die mit dem Festkörper fluchtet, so dass diese durch die reflektierende Beschichtung bzw. durch die Absorberschicht vor Strahlung aus dem plattenförmigen Festkörper geschützt ist. Gegebenenfalls kann auch Material der Wärmesenke im Bereich der Trägerfläche mit abgetragen werden, um sicherzustellen, dass die Klebstoffschicht vollständig abgetragen werden kann. Um einen bündigen Abschluss der Klebstoffschicht mit dem umlaufenden Rand des plattenförmigen Festkörpers zu erreichen, kann ein überstehender Bereich der Klebstoffschicht ggf. auch mit Hilfe eines Lösungsmittels (z.B. mit Aceton, Methanol, Nitromethan, Methylpyrolidon, Isopropanol, etc.) oder durch eine Veraschung mit Hilfe eines sauerstoffhaltigen Plasmas (plasmaunterstütztes reaktives Ionen-Ätzen) entfernt werden.

In einer weiteren Ausführungsform ist an einem nicht zur Aufbringung der Klebstoffschicht vorgesehenen Abschnitt der Trägerfläche und/oder an einem umlaufenden Rand des plattenförmigen Festkörpers eine Stoppschicht zur Verhinderung der Benetzung durch die Klebstoffschicht angebracht. Durch das Vorsehen einer Stoppschicht für den Klebstoff kann die unerwünschte Benetzung von Bereichen der Trägerfläche verhindert werden, an denen kein Klebstoff aufgebracht werden soll. Auch die Benetzung des umlaufenden Randes des plattenförmigen Festkörpers mit Klebstoff kann mit Hilfe einer Klebstoff-Stoppschicht verhindert bzw. stark verringert werden. Wenn der verwendete Klebstoff hydrophobe Eigenschaften aufweist (z.B. weil er ein hydrophobes Lösungsmittel enthält), kann als Stoppschicht (bzw. Anti-Haftschicht) ein hydrophiles Material verwendet werden (oder umgekehrt). Zur Verhinderung der Benetzung durch herkömmliche Klebstoffe haben sich insbesondere folgende Materialien als günstig herausgestellt: Lacke, speziell Photolacke, Polymerverbindungen, beispielsweise PMMA, Hexamethyldisilazan (HMDS). Gegebenenfalls an der Stoppschicht abgelagerte Klebstoff-Reste können in der Regel auf besonders einfache Weise von der Stoppschicht entfernt werden. Die Stoppschicht kann nach dem Aufbringen und Verfestigen der Klebstoffschicht ggf. mit Hilfe eines Lösungsmittels, z.B. Aceton, vom umlaufenden Rand des Festkörpers bzw. von der Trägerfläche entfernt werden.

Bei einer weiteren Ausführungsform umfasst die Festkörperlaseranordnung zusätzlich eine Fokussiereinrichtung zur Fokussierung von Pumpstrahlung auf den plattenförmigen Festkörper. Als Fokussiereinrichtung kann beispielsweise ein Fokussierspiegel, insbesondere ein Parabolspiegel, dienen. Mit Hilfe eines solchen Fokussierspiegels, der mehrere Reflexionsbereiche aufweist, kann die Pumpstrahlung den plattenförmigen Festkörper mehrfach durchlaufen und auf diese Weise kann die Effektivität der Anordnung erhöht werden. Um eine hohe Ausgangsleistung von z.B.2 kW und mehr zu erzielen, kann der plattenförmige Festkörper auf Temperaturen von mehr als 360 K, von mehr als 400 K oder ggf. von 500 K und mehr aufgeheizt werden.

Die reflektierende Beschichtung weist typischer Weise ein dielektrisches Material auf, wobei sich insbesondere Fluoride oder Oxide von Metallen oder Halbmetallen als geeignete Schichtmaterialien herausgestellt haben. Die reflektierende Beschichtung kann eine einzige Schicht aus einem dielektrischen Material aufweisen, in der Regel wird aber eine Mehrlagen-Beschichtung verwendet, welche typischer Weise alternierende Schichten aus zwei Materialien mit unterschiedlichen Brechungsindizes aufweist, die aufgrund von Interferenzeffekten eine stark reflektierende Wirkung für die Laserstrahlung haben. Die reflektierende Beschichtung kann sowohl für die Pumpstrahlung als auch für die von dem laseraktiven Medium erzeugte Laserstrahlung eine besonders hohe Reflexion (von 99,9% oder mehr) aufweisen. Gegebenenfalls kann die reflektierende Beschichtung auch zwei reflektierende Schichten oder Mehrlagen-Schichtsysteme aufweisen, die für die Reflexion der Pumpstrahlung bzw. der in dem aktiven Medium erzeugten Laserstrahlung optimiert sind.

In einer weiteren Ausführungsform weist die reflektierende Beschichtung eine Dicke zwischen ca. 1 µm und ca. 10 µm auf. Die Vermeidung von zu großen Dicken ist günstig, um den Wärmefluss durch die reflektierende Beschichtung nicht zu stark zu reduzieren. Es versteht sich aber, dass ggf. auch reflektierende Beschichtungen mit größeren Dicken verwendet werden können. Ggf. kann die reflektierende Beschichtung auch eine Dicke von weniger als 1 µm aufweisen, sofern sichergestellt ist, dass diese eine ausreichend große Reflektivität R (typischer Weise von mindestens 99,9%) aufweist. Die reflektierende Beschichtung kann eine konstante Dicke aufweisen, die Dicke der reflektierenden Beschichtung kann aber auch - typischer Weise innerhalb der oben genannten Grenzen - ortsabhängig variieren.

In einer weiteren Ausführungsform weist die Klebstoffschicht eine Dicke von weniger als 5 µm, bevorzugt von weniger als 1 µm, besonders bevorzugt von weniger als 0,5 µm, insbesondere von weniger als 0,01 µm auf. Je dünner die Klebstoffschicht, desto effektiver kann Wärme aus dem plattenförmigen Festkörper abgeführt werden.

In einer weiteren Ausführungsform ist der Klebstoff der Klebstoffschicht ausgewählt aus der Gruppe umfassend: Silikat-Klebstoffe, Acrylat-Klebstoffe und Zweikomponentenklebstoffe, insbesondere Epoxidharz-Klebstoffe. Epoxidharz-Klebstoffe sind zweikomponentig aus Harz und Härter aufgebaut. Acrylat-Klebstoffe sind chemisch härtende Polymerisationsklebstoffe, wobei insbesondere Methylmethacrylat-Klebstoffe oder Cyanacrylat-Klebstoffe zur Bildung der Klebstoffschicht verwendet werden können. Auch anorganische Klebstoffe, insbesondere Silikat-Klebstoffe, können zur Bildung der Klebstoffschicht dienen. Insbesondere kann auch ein Klebstoff verwendet werden, wie er in der eingangs zitierten EP 1 178 579 A2 beschrieben ist, d.h. ein Klebstoff, der einen Wärmewiderstand von weniger als 10 K mm² /W aufweist, füllstofffrei ist oder einen Füllstoff aufweist, eine Scherfestigkeit von mehr als 5 N/mm² aufweist etc.

Bei einer weiteren Ausführungsform ist das Material der Wärmesenke ausgewählt aus der Gruppe umfassend: Carbide, insbesondere SiC oder AgC, Metalle, insbesondere Kupfer, CuW, Diamant und diamant-haltige Werkstoffe. Die Wärmesenke sollte aus einem gut wärmeleitenden Material bestehen. Diese Eigenschaften erfüllen typischer Weise Metalle, Diamant oder diamant-haltige (Komposit-)Werkstoffe, z.B. Diamant-Metall-Komposit-Werkstoffe, insbesondere Kupfer-Diamant-Kompositwerkstoffe, aber auch Carbide. Als Kühlanbindung zur Abfuhr von Wärme von der Wärmesenke kann eine Wasser-Kühlung an der Unterseite der Wärmesenke vorgesehen werden, wobei die Durchfluss-Rate bei der so genannten Impingement-Kühlung ("Wasserdusche") beispielsweise zwischen ca. 300 l/h und ca. 800 l/h betragen kann. Auch andere Kühlprinzipien, z.B. Mikrokanalkühler, Heatpipe oder die Direktkühlung mittels Kältemittel, können für die Kühlanbindung genutzt werden.

Der plattenförmige Festkörper bzw. das laseraktive Medium können beispielsweise einen Wirtskrisfiall aufweisen, welcher ausgewählt ist aus der Gruppe umfassend: YAG, YVO4, YO3, Sc2O3, Lu2O3, KGdWO4, KYWO4, YAP, YALO, GGG, GSGG, GSAG, LBS, GCOB, FAP, SFAP, YLF etc. Diese Wirtskristalle können jeweils mit Yb3+ oder Nd3+, Ho, Tm3 etc. als aktivem Material dotiert sein. Insbesondere kann der Festkörper bzw. das laseraktive Medium auch als Halbfeiter-(Hetero)-Struktur ausgeprägt sein und aus den Materialien GaAs und Derivaten AllnGaAs oder auch GaAsInN, InP und dessen Derivaten ,GaN und Derivaten AllnGaN, GaP bzw Derivaten AlGaInP InSb und dessen Derivaten oder auch SbTe und Derivaten bestehen.

Ein weiterer Aspekt der Erfindung betrifft ein Verfahren zur Herstellung einer Laserverstärkeranordnung wie oben beschrieben, umfassend die Schritte: Aufbringen der reflektierenden Beschichtung auf den plattenförmigen Festkörper, Aufbringen der Klebstoffschicht zwischen den plattenförmigen Festkörper und die Wärmesenke, sowie Ausbilden des strahlungsundurchlässigen Bereichs zwischen der der Klebstoffschicht zugewandten Seite des plattenförmigen Festkörpers und der Trägerfläche der Wärmesenke.

Bei einer Variante wird zum Ausbilden des strahlungsundurchlässigen Bereichs einem unterbrechungsfreier Bereich der reflektierenden Beschichtung an dem Festkörper gebildet. Wie weiter oben dargestellt wurde, kann in dem unterbrechungsfrei aufgebrachten Bereich die Klebstoffschicht wirksam vor Strahlung aus dem Festkörper abgeschirmt werden.

Bei einer weiteren Variante wird zum Ausbilden des strahlungsundurchlässigen Bereichs eine Absorberschicht auf den Festkörper und/oder auf die reflektierende Beschichtung aufgebracht. Die Absorberschicht kann vollflächig auf die reflektierende Beschichtung aufgebracht werden, es ist aber ggf. auch möglich, die Absorberschicht nur in einem radial außen liegenden Randbereich auf die reflektierende Beschichtung oder auf den Festkörper aufzubringen, an dem die reflektierende Beschichtung Lücken aufweist. Insbesondere die Aufbringung der Absorberschicht auf den Festkörper in einem außerhalb des Pumpflecks befindlichen Bereich ist günstig, da in diesem Fall die Absorberschicht zur Reduzierung von spontanen Emissionen in dem Festkörper beiträgt. Das Verfahren umfasst zusätzlich: Erzeugen einer bündig mit dem plattenförmigen Festkörper abschließenden Klebstoffschicht durch randseitiges Abtragen des plattenförmigen Festkörpers gemeinsam mit der Klebstoffschicht. In diesem Fall wird der plattenförmige Festkörper gemeinsam mit der Klebstoffschicht (und der reflektierenden Beschichtung sowie ggf. der Absorberschicht) randseitig beschnitten, nachdem dieser auf die Wärmesenke aufgebracht wurde. Das randseitige Abtragen erfolgt hierbei mittels eines Verfahrens, welches zum Materialabtrag entlang der Dickenrichtung des plattenförmigen Festkörpers geeignet ist und welches eine typischer Weise bezüglich der Trägerfläche der Wärmesenke geneigte Schnittkante an dem Festkörper erzeugt. Zu diesem Zweck kann insbesondere ein thermisches Abtragsverfahren (z.B. Ablations-Verfahren) mit Hilfe eines Strahlwerkzeugs, beispielsweise mit Hilfe eines Lasers dienen, aber auch ein mechanischer Materialabtrag ist möglich. Beim randseitigen Beschneiden kann ggf. ein Teil des Materials der Wärmesenke an der Trägerfläche mit abgetragen werden, um sicherzustellen, dass die Klebstoffschicht vollständig entfernt wurde. Gegebenenfalls kann (z.B. zur Abzentrierung) ein randseitiger Materialabtrag an dem plattenförmigen Festkörper auch schon vor dem Aufbringen des plattenförmigen Festkörpers auf die Wärmesenke erfolgen.

Bei einer weiteren Variante umfasst das Verfahren zusätzlich: Aufbringen einer Klebstoff-Stoppschicht an einem nicht zum Aufbringen der Klebstoffschicht vorgesehenen Abschnitt der Trägerfläche und/oder an dem umlaufenden Rand des plattenförmigen Festkörpers, um eine Benetzung beim nachfolgenden Aufbringen der Klebstoffschicht zu verhindern. Mit Hilfe der Klebstoff-Stoppschicht kann verhindert werden, dass die Klebstoffschicht randseitig über den plattenförmigen Festkörper übersteht. Wie weiter oben beschrieben wurde, kann die Klebstoff-Stoppschicht nach dem Verfestigen bzw. Aushärten des Klebstoffs mit Hilfe eines Lösungsmittels entfernt werden, um zu verhindern, dass die Strahlung aus dem Festkörper von der Klebstoff-Stoppschicht absorbiert wird.

Alternativ oder zusätzlich kann ein über den plattenförmigen Festkörper überstehender Anteil der Klebstoffschicht durch ein Lösungsmittel, z.B. Aceton, und/oder durch einen Ätzprozess entfernt werden, z.B. durch eine Veraschung mit Hilfe eines sauerstoffhaltigen Plasmas. Beim Entfernen des überstehenden Anteils kann aber ggf. der Klebstoff nicht vollständig entfernt werden, d.h. es verbleiben in der Regel Klebstoff-Rückstände auf der Trägerfläche bzw. am umlaufenden Rand.

Es zeigen:
- Fig. 1: eine schematische Darstellung einer Festkörperlaseranordnung in Form eines Scheibenlasers,
- Fig. 2: ein Detail der Anordnung von Fig. 1 mit einer auf einer Wärmesenke mittels einer Klebstoffschicht fixierten Laserscheibe,
- Fig. 3a,b: Darstellungen eines Randbereichs einer Laserscheibe, an dem Streustrahlung aus der Laserscheibe in eine Klebstoffschicht gelangen kann,
- Fig. 4a-c: Darstellungen eines Randbereichs der Laserscheibe von Fig. 2, in dem die Klebstoffschicht durch einen strahlungsundurchlässigen Bereich vor Laserstrahlung geschützt bzw. abgeschirmt wird, sowie
- Fig. 5: eine Darstellung analog Fig. 2 mit einer Klebstoff-Stoppschicht.

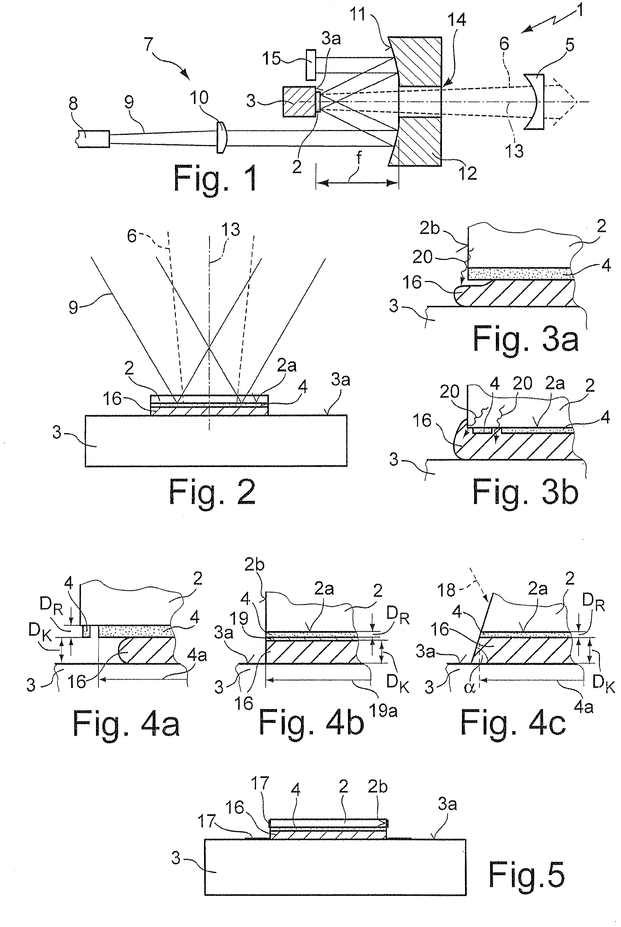

**Fig. 1** zeigt eine Festkörperlaseranordnung in Form eines Scheibenlasers 1, welcher einen plattenförmigen Festkörper 2 (nachfolgend auch als Laserscheibe bezeichnet) als laseraktives Medium aufweist, der zur Kühlung auf einer Wärmesenke 3, genauer gesagt auf einer Trägerfläche 3a der Wärmesenke 3 angeordnet ist. An der der Wärmesenke 3 zugewandten Seite 2a der Laserscheibe 2 (vgl. **Fig. 2****)** ist eine reflektierende Beschichtung 4 aufgebracht, die zusammen mit einem teildurchlässigen Auskoppelspiegel 5 einen Resonator für durch Anregung des laseraktiven Mediums in der Laserscheibe 2 erzeugte Laserstrahlung 6 bildet, welche den Resonator durch den teildurchlässigen Auskoppelspiegel 5 verlässt, wie in Fig. 1 durch einen Pfeil angedeutet ist.

Zur Anregung des laseraktiven Mediums der Laserscheibe 2 weist der Scheibenlaser 1 eine Pumplichfianordnung 7 mit einer Pumplichtquelle 8 auf, welche einen zunächst divergenten Pumplichtstrahl 9 erzeugt, der an einer in Fig. 1 zur Vereinfachung in Form einer einzelnen Linse 10 dargestellten Kollimationsoptik kollimiert wird. Der kollimierte Pumplichtstrahl 9 trifft auf eine Reflexionsfläche 11, welche an einem Hohlspiegel 12 gebildet ist. Die Reflexionsfläche 11 verläuft drehsymmetrisch zu einer Mittelachse 13 des Hohlspiegels 12 und ist parabelförmig gekrümmt, d.h. der Hohlspiegel 12 bildet einen Parabolspiegel. Der kollimierte Pumplichtstrahl 9 verläuft parallel zur Mittelachse 13 des Hohlspiegels 12. Der Hohlspiegel 12 weist weiterhin eine zentrische Öffnung 14 zum Durchtritt für die in der Laserscheibe 2 als laseraktivem Medium erzeugte Laserstrahlung 6 auf.

Der kollimierte Pumplichtstrahl 9 wird an der parabolischen Reflexionsfläche 11 reflektiert und auf den im Brennpunkt bzw. der Brennebene des Hohlspiegels 12 (mit Brennweite f) angeordneten plattenförmigen Festkörper 2 fokussiert. Hierbei wird eine Strahlaustrittsfläche der Pumplichtquelle 8 auf das laseraktive Medium bzw. auf den plattenförmigen Festkörper 2 in der Brennebene in einem Abbildungsmaßstab abgebildet, welcher durch die Brennweite f des Parabolspiegels 12 und die (nicht gezeigte) Brennweite der Kollimationslinse 10 festgelegt ist. Es versteht sich, dass die Erzeugung des kollimierten Pumplichtstrahls 9 auch auf andere Weise erfolgen kann.

Der Pumplichtstrahl 9 wird an der reflektierenden Beschichtung 4 an der Rückseite der Laserscheibe 2 reflektiert, trifft divergent auf die Reflexionsfläche 11 und wird an dieser nochmals reflektiert. Der reflektierte Pumplichtstrahl 9 wird aufgrund der parabelförmigen Geometrie der Reflexionsfläche 11 hierbei kollimiert und trifft nachfolgend auf eine Umlenkeinrichtung 15 in Form eines in einer Ebene senkrecht zur Mittelachse 13 angeordneten Planspiegels und wird an diesem in sich zurückreflektiert.

Beim oben im Zusammenhang mit Fig. 1 beschriebenen Pumpschema wurde noch nicht beschrieben, dass der Pumplichtstrahl 9 nach dem ersten Auftreffen auf die Reflexionsfläche 11 und dem letzten Auftreffen auf die Reflexionsfläche 11 mehrmals zwischen an der Reflexionsfläche 11 gebildeten, in unterschiedlichen Winkelbereichen um die Mittelachse 13 angeordneten Reflexionsbereichen umgelenkt wird. Diese Winkelbereiche des Parabolspiegels 12 erstrecken sich in Umfangsrichtung um die Mittelachse 13 und können insbesondere gleich groß sein.

Der mittels der Linse 10 kollimierte Pumplichtstrahl 9 trifft - wie in Fig. 1 gezeigt - an einem ersten Reflexionsbereich auf die Reflexionsfläche 11, wird von dort zur Laserscheibe 2 und von der Laserscheibe 2 bzw. von der dort angebrachten reflektierenden Beschichtung 4 auf einen zweiten Reflexionsbereich in einem anderen Winkelbereich an der Reflexionsfläche 11 umgelenkt. Dieser Vorgang kann mehrmals wiederholt werden, bis der Pumplichtstrahl 9 mittels des Planspiegels 15 in sich zurück reflektiert wird. Die Umlenkung zwischen den Reflexionsbereichen der Reflexionsfläche 11 kann mit Hilfe von nicht bildlich dargestellten Umlenkeinrichtungen z.B. in Form von (Bi-)Prismen erfolgen. Für Details der Umlenkung zwischen unterschiedlichen Reflexionsbereichen des Parabolspiegels 12 sei auf die eingangs zitierte DE 100 05 195 A1 verwiesen.

Wie in Fig. 2 gut zu erkennen ist, ist der plattenförmige Festkörper 2 mit der Trägerfläche 3a der Wärmesenke 3 über eine Klebstoffschicht 16 verbunden, die grundsätzlich wie in der eingangs zitierten EP 1 178 579 A2 beschrieben ausgebildet sein kann. Die Klebstoffschicht 16 ist im vorliegenden Beispiel als Epoxidharz-Klebstoffschicht ausgebildet, es können aber auch andere Arten von Klebstoffen, z.B. Silikat-Klebstoffe oder Acrylat-Klebstoffe, für die vorliegende Anwendung verwendet werden.

Bei der in Fig. 2 gezeigten Anordnung, welche im Wesentlichen der in der EP 1 178 579 A2 beschrieben Anordnung entspricht, werden aufgrund der mehrfachen Umläufe der Pumpstrahlung 9 besonders hohe Temperaturen in der Laserscheibe 2 erreicht, die insbesondere bei mehr als 360 K, ggf. bei mehr als 400 K oder sogar bei ca. 500 K liegen können. Bei der in der EP 1 178 579 A2 beschriebenen Laserverstärkeranordnung schließt die Klebstoffschicht 16 typischer Weise nicht bündig mit dem umlaufenden Rand 2b der Laserscheibe 2 ab, wie nachfolgend anhand von **Fig. 3a,b** dargestellt wird.

Fig. 3a zeigt den umlaufenden Rand 2b der Laserscheibe 2 mit der Klebstoffschicht 16, welche im Bereich des umlaufenden Randes 2b nicht an der reflektierenden Beschichtung 4 haftet bzw. diese nicht vollständig benetzt, so dass die Klebstoffschicht 16 seitlich über den Rand 2b der Laserscheibe 2 übersteht und sich auf einen Abschnitt der Trägerfläche 3a erstreckt, der nicht von der Laserscheibe 2 überdeckt wird, sodass die Klebstoffschicht 16 von Strahlung 20 aus dem Festkörper 2 getroffen wird. Fig. 3b zeigt analog eine Klebstoffschicht 16, welche seitlich über den Rand 2b der Laserscheibe 2 übersteht, wobei die dort gezeigte Klebstoffschicht 16 zusätzlich auch an dem umlaufenden Rand 2b der Laserscheibe 2 anhaftet und dort Strahlung 20 aus dem Festkörper 2 ausgesetzt ist. In Fig. 3b ebenfalls zu erkennen ist eine reflektierende Beschichtung 4, welche in der Nähe des Randes 2b unterbrochen ist und dort eine Lücke aufweist, in welche die Klebstoffschicht 16 eingedrungen ist, so dass diese dort unmittelbar mit der Unterseite 2a Laserscheibe 2 in Kontakt kommt und ebenfalls Strahlung 20 aus dem Festkörper 2 aufsgesetzt ist.

Obwohl der in Fig. 3a,b gezeigte Bereich außerhalb eines in Fig. 2 gezeigten Volumenbereichs der Laserscheibe 2 liegt, in dem die Pumpstrahlung 9 auftrifft bzw. in dem das Strahlungsfeld der in dem laseraktiven Medium 2 erzeugten Laserstrahlung 6 sich ausbildet, ist auch der in Fig. 3a,b gezeigte Randbereich der Klebstoffschicht 16 dennoch der in der Laserscheibe 2 erzeugten Strahlung 20 ausgesetzt, die durch so genannte verstärkte spontane Emissionen entsteht. Das in der Nähe des Randes 2b der Laserscheibe 2 vorhandene Laserstrahlungsfeld kann zur Degradation der Klebstoffschicht 16 führen, was zu einer Verringerung der Effektivität und ggf. zu einem Abbrennen der Laserscheibe 2 in dem in Fig. 3a,b gezeigten Randbereich führen kann.

Um eine Degradation der Klebstoffschicht 16 bei der in Fig. 2 gezeigten Anordnung zu vermeiden, wird die Klebstoffschicht 16 durch einen strahlungsundurchlässigen Bereich 4a, 19a vollständig abgeschirmt, wie nachfolgend anhand von **Fig. 4a****-c** beschrieben wird:
Die in Fig. 4a gezeigte reflektierende Beschichtung 4 weist einen strahlungsundurchlässigen, unterbrechungsfrei zusammenhängenden Bereich 4a auf, der sich nicht bis zum seitlichen Rand 2b der Laserscheibe 2 erstreckt. Die seitliche Ausdehnung der Klebstoffschicht 16 ist in diesem Beispiel auf den strahlungsundurchlässigen Bereich 4a begrenzt. Bei dem in Fig. 4a gezeigten Beispiel erstreckt sich die Klebstoffschicht 16 sogar nicht einmal bis zum Rand des strahlungsundurchlässigen Bereichs 4a, sondern ist zu diesem Rand beabstandet bzw. gegenüber diesem zurückgesetzt, so dass der strahlungsundurchlässige Bereich 4a seitlich über die Klebstoffschicht 16 übersteht. Der Abstand der Klebstoffschicht 16 zum Rand des strahlungsundurchlässigen Bereichs 4a ist hierbei günstiger Weise mindestens so groß ist wie der Abstand zum umlaufenden Rand 2b der Laserscheibe 2. Auf diese Weise kann verhindert werden, dass Laserstrahlung durch die Lücke in der reflektierenden Beschichtung 4 bzw. aus dem Bereich des Randes 2b der Laserscheibe 2 in den Bereich der Klebstoffschicht 16 gelangt.

Um zu vermeiden, dass bei der in Fig. 4a gezeigten Anordnung die Klebstoffschicht 16 über den strahlungsundurchlässigen Bereich 4a der reflektierenden Beschichtung 4 übersteht, sollte eine genau dosierte Menge von Klebstoff zur Bildung der Klebstoffschicht 16 verwendet werden. Insbesondere hat es sich in diesem Fall als günstig erwiesen, wenn ein Klebstoff mit einem Füllstoff verwendet wird, der Partikel mit einer definierten Abmessung aufweist. Auf diese Weise kann beim Andrücken der Laserscheibe 2 gegen die Trägerfläche 3a der Wärmesenke 3 eine Klebstoffschicht 16 mit einer definierten (konstanten) Dicke D_{K} erzeugt werden, welche der Abmessung der (z.B. kugelförmigen) Partikel des Füllstoffs entspricht. Die (maximale) Dicke D_{K} der Klebstoffschicht 16 sollte möglichst gering sein, um einen guten Wärmefluss zur Wärmesenke 3 zu ermöglichen. Insbesondere kann die Klebstoffschicht eine Dicke von weniger als 5,0 µm, von weniger als 1,0 µm, von weniger als 0,5 µm, oder sogar von weniger als 0,01 µm aufweisen.

Die reflektierende Beschichtung 4 weist günstiger Weise eine Dicke D_{R} zwischen 1 µm und 10 µm auf. Die reflektierende Beschichtung 4 kann aus einer einzelnen Schicht bestehen, in der Regel handelt es sich bei der Beschichtung 4 aber um ein Mehrlagen-System, welches durch Interferenzeffekte eine besonders hohe Reflektivität (von z.B. mehr als 99,9 %) für die in dem laseraktiven Medium 2 erzeugte Laserstrahlung 6 ermöglicht. Als dielektrische Schichtmaterialien können beispielsweise Fluoride oder Oxide verwendet werden.

Bei dem in Fig. 4b gezeigten Beispiel ist auf die reflektierende Beschichtung 4 eine Absorberschicht 19 aufgebracht, welche mit der reflektierenden Beschichtung 4, der Klebstoffschicht 16 und dem umlaufenden Rand 2b des Festkörpers 2 bündig abschließt. Die Absorberschicht 19 ist im vorliegenden Beispiel aus Chrom gebildet und weist eine ausreichende Dicke auf, um Strahlung aus dem Inneren des Festkörpers 2 zu absorbieren, so dass diese nicht auf die Klebstoffschicht 16 trifft.

Die Absorberschicht 19 bildet einen sich bis zum Rand 2b erstreckenden strahlungsundurchlässigen Bereich 19a und überdeckt hierbei in Fig. 4b nicht bildlich dargestellte Lücken in der reflektierenden Beschichtung 4.

Anders als in Fig. 4b gezeigt ist, kann die Absorberschicht 19 zwischen der reflektierenden Beschichtung 4 und dem Festkörper 2 angebracht werden, wobei die Absorberschicht 19 in diesem Fall nur in einem radial außen liegenden Randbereich des Festkörpers 2 angebracht ist und der Bereich des Festkörpers 2, in dem der in Fig. 2 gezeigte Pumplichtstrahl 9 auftrifft, ausgespart wird. Der strahlungsundurchlässige Bereich kann in diesem Fall durch eine Kombination eines (radial inneren) unterbrechungsfrei aufgebrachten Bereichs der reflektierenden Beschichtung 4 und einen (radial äußeren) unterbrechungsfrei aufgebrchten Bereich der Absorberschicht 19 gebildet werden. Es ist aber auch möglich, die reflektierende Beschichtung 4 vollflächig auf den Festkörper 2 aufzubringen, so dass sich die reflektierende Beschichtung 4 und die Absorberschicht 19 in dem radial äußeren Randbereich überlappen. Es versteht sich, dass es in Bereichen, in denen sowohl die reflektierende Beschichtung 4 als auch die Absorberschicht 19 aufgebracht sind, ausreichend ist, wenn entweder die reflektierende Beschichtung 4 oder die Absorberschicht 19 unterbrechungsfrei aufgebracht sind. Ist beispielsweise die reflektierende Beschichtung 4 unterbrechungsfrei aufgebracht, so kann die Absorberschicht 19 Lücken aufweisen und umgekehrt.

Auch bei dem in Fig. 4c gezeigten Ausführungsbeispiel schließt der strahlungsundurchlässige Bereich 4a der reflektierenden Beschichtung 4 bündig mit dem umlaufenden Rand 2b des plattenförmigen Festkörpers 2 ab. Auch die Klebstoffschicht 16 schließt bei diesem Ausführungsbeispiel bündig mit dem umlaufenden Rand 2b des plattenförmigen Festkörpers 2 ab. Der in Fig. 4c gezeigte bündige Abschluss wird durch ein abtragendes Verfahren ermöglicht, bei dem ein in Fig. 4c angedeuteter, unter einen Winkel zur Trägerfläche 3a ausgerichteter thermischer Bearbeitungsstrahl 18 die Laserscheibe 2 gemeinsam mit der reflektierenden Beschichtung 4 und der Klebstoffschicht 16 randseitig beschneidet. Auf diese Weise kann nicht nur der Klebstoff entfernt werden, der über die Laserscheibe 2 seitlich übersteht, sondern es kann auch ein randseitiger Bereich der reflektierenden Beschichtung 4 abgetragen werden, an dem diese typischer Weise nicht zusammenhängend auf die Laserscheibe 2 aufgebracht ist (vgl. Fig. 3b). Nach dem Abtragen ist sowohl der Rand 2b der Laserscheibe 2 als auch der Rand der reflektierenden Beschichtung 4 und der Rand der Kleberschicht 16 konisch und diese schließen mit der Trägerfläche 3a einen Neigungswinkel α zwischen ca. 10° und ca. 80° ein. Bei dem in Fig. 4c gezeigten Materialabtrag kann auch das Material der Wärmesenke 3 an der Trägerfläche 3a teilweise abgetragen werden, um den überstehenden Teil der Klebstoffschicht 16 vollständig zu entfernen.

Die Wärmesenke 3 ist aus einem gut wärmeleitenden Material hergestellt, Zumindest im Bereich der Trägerfläche 3a kann die Wärmesenke beispielsweise aus Diamant oder einem Diamant-Metall-Verbundwerkstoff, aber auch aus einem Carbid gebildet sein. Es versteht sich aber, dass die Wärmesenke 3 auch aus einem anderen, z.B. metallischen Material (Kupfer etc.) oder einer metallischen Verbindung, z.B. CuW, hergestellt werden kann.

Um ein Abzentrieren der Laserscheibe 2 zu ermöglichen, kann ein Materialabtrag ggf. auch schon vor dem Aufkleben der Laserscheibe 2 auf die Wärmesenke 3 erfolgen. Auch kann zur Erzeugung einer vollflächig auf die Laserscheibe 2 aufgebrachten reflektierenden Beschichtung 4, die sich unterbrechungsfrei bis zum Rand 2b der Laserscheibe 2 erstreckt, ggf. eine Inspektion der reflektierenden Beschichtung 4 zur Detektion der dort vorhandenen Lücken vorgenommen werden und ggf. gezielt die Lücken mit dem Material der übrigen reflektierenden Beschichtung 4 oder ggf. mit einem anderen Material aufgefüllt werden, welches eine reflektierende oder absorbierende Wirkung besitzt.

Ein bündiges Abschließen der Klebstoffschicht 16 bzw. eine Begrenzung auf den strahlungsundurchlässigen Bereich 4a der reflektierenden Beschichtung 4 kann auch erhalten werden, wenn wie in **Fig. 5** gezeigt eine Stoppschicht 17 zur Verhinderung der Benetzung durch die Klebstoffschicht 16 in einem nicht zur Aufbringung der Klebstoffschicht 16 vorgesehenen Abschnitt der Trägerfläche 3a (unmittelbar angrenzend zu dem Bereich, in dem die Laserscheibe 2 positioniert wird) und an dem umlaufenden Rand 2b der Laserscheibe 2 angebracht ist. Die Stoppschicht 17 kann in Abhängigkeit von der Art des Klebstoffs hydrophile oder hydrophobe Eigenschaften aufweisen, wobei sich insbesondere folgende Materialien als günstig erwiesen haben: Lacke, speziell Photolacke, PMMA, Hexamethyldisilazan (HMDS), etc. Die Stoppschicht 17 verhindert die Benetzung durch den Klebstoff bzw. ermöglicht es, ggf. an dieser verbleibende Klebstoffreste auf einfache Weise (in der Regel mit Hilfe eines Lösungsmittels) zu entfernen. Insbesondere kann nach dem Aushärten des Klebstoffs die Stoppschicht 17 mit Hilfe eines Lösungsmittels, z.B. Aceton, von der Trägerfläche 3a bzw. dem umlaufenden Rand 2b entfernt werden, um eine Absorption von Strahlung aus der Laserscheibe 2 zu verhindern.

Alternativ oder zusätzlich kann zum Entfernen von Klebstoffresten an Abschnitten von Oberflächen, an denen eine Benetzung mit dem Klebstoff unerwünscht ist, insbesondere in einem Bereich der Klebstoffschicht 16, der über die Laserscheibe 2 übersteht, ein Lösungsmittel verwendet werden und/oder ein Ätzprozess, z.B. eine Veraschung mittels eines Sauerstoff-Plasmas, durchgeführt werden.

Die oben beschriebene Festkörperlaseranordnung 1, genauer gesagt der plattenförmige Festkörper 2 kann hohen thermischen Belastungen standhalten und in einem Temperaturbereich betrieben werden, der zwischen ca. 270 K und ca. 500 K liegt. Der Betrieb in diesem Temperaturbereich ermöglicht es, Laserstrahlung 6 mit einer Ausgangsleistung von ca. 2 kW oder mehr zu erzeugen, wenn wie in Fig. 1 die Pumpstrahlung 9 eine hohe Zahl von Umlenkungen zwischen unterschiedlichen Reflexionsbereichen erfährt. Es versteht sich, dass die oben beschriebene Vorgehensweise sich auch bei Laserscheiben 2 durchführen lässt, die eine insbesondere konstante Krümmung aufweisen. Auch ist die Geometrie der Laserscheibe 2 nicht auf eine runde Form beschränkt; die Laserscheibe 2 kann vielmehr auch eine quadratische oder rechteckige Geometrie aufweisen.

## Patentansprüche

1. Festkörperlaseranordnung (1), umfassend:
einen plattenförmigen Festkörper (2) mit einem laseraktiven Medium,
eine Wärmesenke (3),
eine zwischen einer Trägerfläche (3a) der Wärmesenke (3) und dem plattenförmigen Festkörper (2) angebrachte Klebstoffschicht (16), sowie eine reflektierende Beschichtung (4), die an einer der Klebstoffschicht (16) zugewandten Seite (2a) an dem plattenförmigen Festkörper (2) angebracht ist,
**dadurch gekennzeichnet,**
**dass** die Klebstoffschicht (16) durch einen strahlungsundurchlässigen Bereich (4a, 19a), der zwischen der der Klebstoffschicht (16) zugewandten Seite (2a) des plattenförmigen Festkörpers (2) und der Trägerfläche (3a) der Wärmesenke (3) gebildet ist, vollständig vor Strahlung (20) aus dem plattenförmigen Festkörper (2) abgeschirmt ist, so dass keine direkte Sicht-Verbindung zwischen dem Festkörper (2) und der Klebstoffschicht (16) besteht, und die Klebstoffschicht (16) bündig mit einem umlaufenden Rand des plattenförmigen Festkörpers (2) abschließt,
**dadurch gekennzeichnet,**
**dass** der umlaufende Rand mit der der Klebstoffschicht (16) zugewandten Seite (2a) des plattenförmigen Festkörpers (2) einen von 90° verschiedenen Neigungswinkel (α) einschließt.

2. Festkörperlaseranordnung nach Anspruch 1, bei welcher der strahlungsundurchlässige Bereich einen unterbrechungsfrei an dem plattenförmigen Festkörper (2) angebrachten Bereich (4a) der reflektierenden Beschichtung (4) enthält.

3. Festkörperlaseranordnung nach Anspruch 1 oder 2, bei welcher der strahlungsundurchlässige Bereich einen unterbrechungsfreien Bereich (19a) einer zwischen dem plattenförmigen Festkörper (2) und der Klebstoffschicht (16) angebrachten Absorberschicht (19) enthält.

4. Festkörperlaseranordnung nach einem der vorhergehenden Ansprüche, bei welcher der strahlungsundurchlässige Bereich (4a) bündig mit dem plattenförmigen Festkörper (2) abschließt.

5. Festkörperlaseranordnung nach einem der vorhergehenden Ansprüche, bei welcher an der Wärmesenke (3) in einem nicht zur Aufbringung der Klebstoffschicht (16) vorgesehenen Abschnitt der Trägerfläche (3a) und/oder an einem umlaufenden Rand (2b) des plattenförmigen Festkörpers (2) eine Stoppschicht (17) zur Verhinderung der Benetzung durch die Klebstoffschicht (16) angebracht ist.

6. Festkörperlaseranordnung nach einem der vorhergehenden Ansprüche, weiter umfassend: eine Fokussiereinrichtung (12) zur Fokussierung von Pumpstrahlung (9) auf den plattenförmigen Festkörper (2).

7. Festkörperlaseranordnung nach einem der vorhergehenden Ansprüche, bei welcher die reflektierende Beschichtung (4) eine Dicke (D_{R}) zwischen 1 µm und 10 µm aufweist.

8. Festkörperlaseranordnung nach einem der vorhergehenden Ansprüche, bei welcher die Klebstoffschicht (16) eine Dicke (D_{K}) von weniger als 5,0 µm, bevorzugt von weniger als 1,0 µm, besonders bevorzugt von weniger als 0,5 µm, insbesondere von weniger als 0,01 µm aufweist.

9. Festkörperlaseranordnung nach einem der vorhergehenden Ansprüche, bei welcher der Klebstoff der Klebstoffschicht (16) ausgewählt ist aus der Gruppe umfassend: Silikat-Klebstoffe, Acrylat-Klebstoffe und Zweikomponentenklebstoffe, insbesondere Epoxidharz-Klebstoffe.

10. Festkörperlaseranordnung nach einem der vorhergehenden Ansprüche, bei welcher das Material der Wärmesenke (3) ausgewählt ist aus der Gruppe umfassend: Carbide, insbesondere SiC oder AgC, Metalle, insbesondere Kupfer, CuW, Diamant und diamant-haltige Werkstoffe.

11. Verfahren zur Herstellung einer Festkörperlaseranordnung (1) nach einem der vorhergehenden Ansprüche, umfassend die Schritte:
Aufbringen der reflektierenden Beschichtung (4) auf den plattenförmigen Festkörper (2),
Aufbringen der Klebstoffschicht (16) zwischen den plattenförmigen Festkörper (2) und die Trägerfläche (3a) der Wärmesenke (3), sowie
Ausbilden des strahlungsundurchlässigen Bereichs (4a, 19a) zwischen der der Klebstoffschicht (16) zugewandten Seite (2a) des plattenförmigen Festkörpers (2) und der Trägerfläche (3a) der Wärmesenke (3), wobei das Verfahren weiter umfasst: Erzeugen der bündig mit dem umlaufenden Rand des plattenförmigen Festkörpers (2) abschließenden Klebstoffschicht (16) durch randseitiges Abtragen des plattenförmigen Festkörpers (2) gemeinsam mit der Klebstoffschicht (16).

12. Verfahren nach Anspruch 11, bei dem zum Ausbilden des strahlungsundurchlässigen Bereichs ein unterbrechungsfreier Bereich (4a) der reflektierenden Beschichtung (4) auf den Festkörper (2) aufgebracht wird.

13. Verfahren nach einem der Ansprüche 11 oder 12, bei dem zum Ausbilden des strahlungsundurchlässigen Bereichs (19a) eine Absorberschicht (19) auf die reflektierende Beschichtung (4) und/oder auf den Festkörper (2) aufgebracht wird.

14. Verfahren nach einem der Ansprüche 11 bis 13, weiter umfassend:
Aufbringen einer Klebstoff-Stoppschicht (17) an einem nicht zum Aufbringen der Klebstoffschicht (16) vorgesehenen Abschnitt der Trägerfläche (3a) und/oder an einem umlaufenden Rand (2b) des plattenförmigen Festkörpers (2) zum Verhindern der Benetzung beim nachfolgenden Aufbringen der Klebstoffschicht (16).

15. Verfahren nach einem der Ansprüche 11 bis 14, weiter umfassend: Entfernen eines über den plattenförmigen Festkörper (2) überstehenden Anteils der Klebstoffschicht (16) durch ein Lösungsmittel und/oder durch einen Ätzprozess.

## Claims

1. Solid-state laser arrangement (1) comprising:
a plate-like solid body (2) having a laser-active medium, a heat sink (3),
a layer of adhesive (16) which is applied between a carrier face (3a) of the heat sink (3) and the plate-like solid body (2), and a reflective coating (4) which is applied to the plate-like solid body (2) at a side (2a) facing the adhesive layer (16), **characterised in that** the adhesive layer (16) is completely shielded from radiation (20) from the plate-like solid body (2) by a radiation-impermeable region (4a, 19a) which is formed between the side (2a) of the plate-like solid body (2) facing the adhesive layer (16) and the carrier face (3a) of the heat sink (3), so that there is no direct line-of-sight between the solid body (2) and the adhesive layer (16) and the adhesive layer (16) terminates flush with a peripheral edge of the plate-like solid body (2),
**characterized in that**
the peripheral edge forms with the side (2a) of the plate-like solid body (2) facing the adhesive layer (16) an inclination angle (α) which is different from 90°.

2. Solid-state laser arrangement according to claim 1, wherein the radiation-impermeable region contains a region (4a) of the reflective coating (4), which region is applied to the plate-like solid body (2) in an uninterrupted manner.

3. Solid-state laser arrangement according to claim 1 or claim 2, wherein the radiation-impermeable region contains an uninterrupted region (19a) of an absorber layer (19) which is applied between the plate-like solid body (2) and the adhesive layer (16).

4. Solid-state laser arrangement according to any one of the preceding claims, wherein the radiation-impermeable region (4a) terminates flush with the plate-like solid body (2).

5. Solid-state laser arrangement according to any one of the preceding claims, wherein there is applied to the heat sink (3) in a portion of the carrier face (3a), which portion is not provided for applying the adhesive layer (16), and/or to a peripheral edge (2b) of the plate-like solid body (2) a stop layer (17) for preventing wetting by the adhesive layer (16).

6. Solid-state laser arrangement according to any one of the preceding claims, further comprising: a focusing device (12) for focusing pump radiation (9) onto the plate-like solid body (2).

7. Solid-state laser arrangement according to any one of the preceding claims, wherein the reflective coating (4) has a thickness (D_{R}) between 1 *µ*m and 10 *µ*m.

8. Solid-state laser arrangement according to any one of the preceding claims, wherein the adhesive layer (16) has a thickness (D_{K}) of less than 5.0 *µ*m, preferably of less than 1.0 *µ*m, particularly preferably of less than 0.5 *µ*m, in particular of less than 0.01 *µ*m.

9. Solid-state laser arrangement according to any one of the preceding claims, wherein the adhesive of the adhesive layer (16) is selected from the group comprising: silicate adhesives, acrylate adhesives and dual-component adhesives, in particular epoxy resin adhesives.

10. Solid-state laser arrangement according to any one of the preceding claims, wherein the material of the heat sink (3) is selected from the group comprising: carbides, in particular SiC or AgC, metals, in particular copper, CuW, diamond and diamond-containing materials.

11. Method for producing a solid-state laser arrangement (1) according to any one of the preceding claims, comprising the steps of:
applying the reflective coating (4) to the plate-like solid body (2),
applying the adhesive layer (16) between the plate-like solid body (2) and the carrier face (3a) of the heat sink (3), and
forming the radiation-impermeable region (4a, 19a) between the side (2a) of the plate-like solid body (2) facing the adhesive layer (16) and the carrier face (3a) of the heat sink (3), wherein the method further comprises: producing the adhesive layer (16) which terminates flush with the plate-like solid body (2) by means of edge-side removal of the plate-like solid body (2) together with the adhesive layer (16).

12. Method according to claim 11, wherein, in order to form the radiation-impermeable region, an interruption-free region (4a) of the reflective coating (4) is applied to the solid body (2).

13. Method according to either claim 11 or claim 12, wherein, in order to form the radiation-impermeable region (19a), an absorber layer (19) is applied to the reflective coating (4) and/or to the solid body (2).

14. Method according to any one of claims 11 to 13, further comprising: applying an adhesive stop layer (17) to a portion of the carrier face (3a), which portion is not provided for application of the adhesive layer (16), and/or to a peripheral edge (2b) of the plate-like solid body (2) in order to prevent the wetting during subsequent application of the adhesive layer (16).

15. Method according to any one of claims 11 to 14, further comprising: removing a portion of the adhesive layer (16) protruding beyond the plate-like solid body (2) by means of a solvent and/or by means of an etching process.

## Revendications

1. Dispositif (1) de laser à solide, comprenant :
un solide (2) en forme de plaque présentant un agent à activité laser, un puits thermique (3),
une couche (16) d'adhésif disposée entre une surface support (3a) du puits thermique (3) et le solide (2) en forme de plaque
ainsi qu'un revêtement réfléchissant (4), qui est disposé sur un côté (2a) tourné vers la couche adhésive (16) sur le solide (2) en forme de plaque, **caractérisé en ce que** la couche (16) d'adhésif est complètement protégée contre le rayonnement (20) provenant du solide (2) en forme de plaque par une zone (4a, 19a) opaque au rayonnement, qui est formée entre le côté (2a) tourné vers la couche (16) d'adhésif du solide (2) en forme de plaque et la surface support (3a) du puits thermique (3), de telle sorte qu'il n'existe aucun contact visuel direct entre le solide (2) et la couche (16) d'adhésif et
la couche (16) d'adhésif est affleurante avec un bord périphérique du solide (2) en forme de plaque,
**caractérisé en ce que** le bord périphérique forme un angle d'inclinaison (α) différent de 90° avec le côté (2a) tourné vers la couche (16) d'adhésif du solide (2) en forme de plaque.

2. Dispositif de laser à solide selon la revendication 1, dans lequel la zone opaque au rayonnement contient une zone (4a) de revêtement réfléchissant (4) disposée de manière ininterrompue sur le solide (2) en forme de plaque.

3. Dispositif de laser à solide selon la revendication 1 ou 2, dans lequel la zone opaque au rayonnement contient une zone (19a) ininterrompue d'une couche d'absorbant (19) disposée entre le solide (2) en forme de plaque et la couche (16) d'adhésif.

4. Dispositif de laser à solide selon l'une quelconque des revendications précédentes, dans lequel la zone (4a) opaque au rayonnement est affleurante avec le solide (2) en forme de plaque.

5. Dispositif de laser à solide selon l'une quelconque des revendications précédentes, dans lequel une couche barrière (17), pour empêcher le mouillage par la couche (16) d'adhésif, est disposée sur le puits thermique (3) dans une section de la surface support (3a) non prévue pour l'application de la couche (16) d'adhésif et/ou sur un bord périphérique (2b) du solide (2) en forme de plaque.

6. Dispositif de laser à solide selon l'une quelconque des revendications précédentes, comprenant en outre : un dispositif de focalisation (12) pour la focalisation d'un rayonnement de pompage (9) sur le solide (2) en forme de plaque.

7. Dispositif de laser à solide selon l'une quelconque des revendications précédentes, dans lequel le revêtement réfléchissant (4) présente une épaisseur (D_{R}) entre 1 *µ*m et 10 *µ*m.

8. Dispositif de laser à solide selon l'une quelconque des revendications précédentes, dans lequel la couche (16) d'adhésif présente une épaisseur (D_{K}) inférieure à 5,0 *µ*m, de préférence inférieure à 1,0 *µ*m, de manière particulièrement préférée inférieure à 0,5 *µ*m, en particulier inférieure à 0,01 *µ*m.

9. Dispositif de laser à solide selon l'une quelconque des revendications précédentes, dans lequel l'adhésif de la couche (16) d'adhésif est choisi dans le groupe comprenant : les adhésifs à base de silicate, les adhésifs à base d'acrylate et les adhésifs à deux composants, en particulier les adhésifs à base de résine époxyde.

10. Dispositif de laser à solide selon l'une quelconque des revendications précédentes, dans lequel le matériau du puits thermique (3) est choisi dans le groupe comprenant : les carbures, en particulier SiC ou AgC, les métaux, en particulier le cuivre, CuW, le diamant et les matériaux contenant du diamant.

11. Procédé pour la fabrication d'un dispositif (1) de laser à solide selon l'une quelconque des revendications précédentes, comprenant les étapes de :
application du revêtement réfléchissant (4) sur le solide (2) en forme de plaque,
application de la couche (16) d'adhésif entre le solide (2) en forme de plaque et la surface support (3a) du puits thermique (3), ainsi que
formation de la zone (4a, 19a) opaque au rayonnement entre le côté (2a) tourné vers la couche (16) d'adhésif du solide (2) en forme de plaque et la surface support (3a) du puits thermique (3), le procédé comprenant en outre : la réalisation de la couche (16) d'adhésif affleurante avec le bord périphérique du solide (2) en forme de plaque par usinage du bord du solide (2) en forme de plaque conjointement avec la couche (16) d'adhésif.

12. Procédé selon la revendication 11, dans lequel une zone (4a) ininterrompue de revêtement réfléchissant (4) est appliquée sur le solide (2) pour la formation de la zone opaque au rayonnement.

13. Procédé selon l'une quelconque des revendications 11 ou 12, dans lequel une couche d'absorbant (19) est appliquée sur le revêtement réfléchissant (4) et/ou sur le solide (2) pour la formation de la zone (19a) opaque au rayonnement.

14. Procédé selon l'une quelconque des revendications 11 à 13, comprenant en outre :
l'application d'une couche barrière (17), pour empêcher le mouillage lors de l'application consécutive de la couche (16) d'adhésif, sur une section de la surface support (3a) non prévue pour l'application de la couche (16) d'adhésif et/ou sur un bord périphérique (2b) du solide (2) en forme de plaque.

15. Procédé selon l'une quelconque des revendications 11 à 14, comprenant en outre : l'élimination, par un solvant et/ou par un procédé de décapage, d'une section de la couche (16) d'adhésif qui dépasse du solide (2) sous forme de plaque.
